# EUROPEAN PATENT APPLICATION

(11) **EP 4 764 479 A1**
(43) Date of publication of application: **24.06.2026**
(21) Application number: 25864519.1
(22) Date of filing: 28.08.2025
(51) Int. Cl.: G01N 23/223, G01N 23/2204

(54) **METHOD FOR DETECTING AND ANALYZING FOREIGN SUBSTANCE IN BATTERY CELL**

(30) Priority: 11.09.2024 KR 20240124328
(71) Applicant: LG Energy Solution, Ltd., Seoul 07335 (KR)
(72) Inventor: KIM, Young Jae, Daejeon 34122 (KR); KIM, Jin Wuk, Daejeon 34122 (KR)
(74) Representative: Goddar, Heinz J.
(86) International application number: PCT/KR2025/013133
(87) International publication number: WO 2026/059176

(57) **Abstract**

The present invention provides a method of detecting and analyzing foreign matter in a battery cell which includes: preparing a battery cell to be inspected; obtaining a separator from an electrode assembly by disassembling the battery cell to be inspected; and analyzing the presence or absence of metallic foreign matter on a surface of the separator by introducing the separator into an X-ray fluorescence analysis apparatus, wherein the method is characterized in that the metallic foreign matter exists by penetrating through the surface of the separator facing a positive electrode and the surface of the separator facing a negative electrode in the electrode assembly before disassembly.

## Description

### TECHNICAL FIELD

### Cross-reference to Related Applications

This application claims priority from Korean Patent Application No. 10-2024-0124328, filed on September 11, 2024, the disclosure of which is incorporated by reference herein.

### Technical Field

The present invention relates to a method of detecting and analyzing foreign matter in a battery cell, and particularly, to a method of detecting and analyzing foreign matter in a battery cell using X-ray fluorescence analysis.

### BACKGROUND ART

Recently, rechargeable secondary batteries have been widely used as energy sources for wireless mobile devices. Also, secondary batteries are also attracting attention as an energy source for electric vehicles and hybrid electric vehicles which are being proposed as a solution to air pollution caused by conventional gasoline and diesel vehicles that use fossil fuels. Accordingly, types of applications using the secondary batteries are becoming increasingly diverse due to advantages of the secondary batteries, and it is expected that the secondary batteries will be used in more fields and products in the future than now.

The secondary batteries are also classified according to a structure of an electrode assembly which includes a positive electrode, a negative electrode, and a separator disposed between the positive electrode and the negative electrode, wherein representative examples include a jelly-roll type electrode assembly having a structure in which long sheet-type positive electrodes and negative electrodes are wound with a separator disposed therebetween, a stacked type electrode assembly in which a plurality of positive electrodes and negative electrodes cut into predetermined sizes are sequentially stacked with a separator disposed therebetween, and a stack-folding type electrode assembly having a structure in which unit cells, such as bi-cells or full cells, formed by stacking a predetermined number of positive electrodes and negative electrodes with a separator disposed therebetween are wound. Also, the secondary battery may be prepared by injecting an electrolyte into a battery container in a state in which the electrode assembly is accommodated therein, and sealing the battery container.

In the secondary battery, various types of defects may occur due to various causes during a manufacturing process or use. Particularly, some of the prepared secondary batteries exhibit a phenomenon in which a voltage drop is greater than a self-discharge rate, wherein this phenomenon is referred to as low voltage.

The phenomenon of low-voltage defect in the secondary battery is largely caused by intrusion of metallic foreign matter during the process and an electrolyte solution impregnation defect. Among these, in a case in which the low-voltage defect occurs due to the intrusion of the metallic foreign matter, since the metallic foreign matter may cause an internal short circuit in the secondary battery, it may cause a failure or damage to the secondary battery, and in severe cases, may cause ignition.

Conventionally, in order to identify type and location of foreign matter in a battery cell where the low-voltage defect occurred, an operator had to disassemble the battery cell and then visually inspect surfaces of the electrode and the separator for analysis, wherein in this case, there were problems of large variations between operators and low repeatability and reproducibility.

To overcome limitations of the visual inspection, attempts have been made to analyze the surfaces of the electrode and the separator using a scanning electron microscope (SEM), but there were problems such as low accuracy and a large amount of manpower required for inspection.

### DISCLOSURE OF THE INVENTION

### TECHNICAL PROBLEM

The present invention aims to provide a method of detecting and analyzing foreign matter in a battery cell which may accurately and quickly determine whether a cause of a low-voltage defect is due to the intrusion of metallic foreign matter.

### TECHNICAL SOLUTION

The present invention provides a method of detecting and analyzing foreign matter in a battery cell which includes: preparing a battery cell to be inspected; obtaining a separator from an electrode assembly by disassembling the battery cell to be inspected; and analyzing the presence or absence of metallic foreign matter on a surface of the separator by introducing the separator into an X-ray fluorescence analysis apparatus, wherein the method is characterized in that the metallic foreign matter exists by penetrating through the surface of the separator facing a positive electrode and the surface of the separator facing a negative electrode in the electrode assembly before disassembly.

### ADVANTAGEOUS EFFECTS

Since the present invention may detect and analyze even small-sized foreign matter, may reduce variations in analysis between operators, and may improve repeatability and reproducibility by detecting and analyzing foreign matter on a separator, which is obtained by disassembling a battery cell, through X-ray fluorescence analysis, the present invention may improve accuracy and reliability of detection and analysis of the foreign matter in the battery cell.

When it is possible to accurately and rapidly determine that a cause of a low-voltage defect is due to metallic foreign matter through a method of detecting and analyzing foreign matter in a battery cell of the present invention, there is an advantage in that measures may be taken only by selecting a problematic part without inspecting all equipment in each manufacturing process.

### BRIEF DESCRIPTION OF THE DRAWINGS

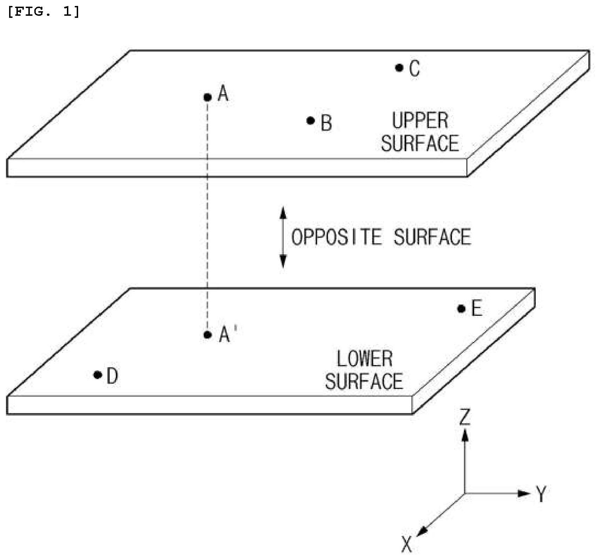

FIG. 1 is a schematic view of an X-ray transmission image according to an embodiment of the invention.

### MODE FOR CARRYING OUT THE INVENTION

Hereinafter, the present invention will be described in detail. Before describing the present invention, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present application, it will be further understood that the terms "include" or "have" specify the presence of features, numbers, steps, operations, elements, components, or combinations thereof described in the specification, but do not preclude the presence or addition of one or more other features, numbers, steps, operations, elements, components, or combinations thereof.

A method of detecting and analyzing foreign matter in a battery cell of the present invention includes a step of preparing a battery cell to be inspected. If the battery cell is a conventional lithium secondary battery, there are no particular restrictions on its shape and structure. Specifically, a cylindrical, prismatic, or pouch type battery cell may all be used. The battery cell is a structure in which an electrolyte solution and an electrode assembly are accommodated in a battery case. Since specific details regarding other components constituting the battery cell are known to those skilled in the art, a detailed description thereof will be omitted.

The battery cell to be inspected may be a battery cell in which a low-voltage defect has occurred. Determination of the low-voltage defect of the battery cell may be performed by various methods, for example, by measuring an open circuit voltage (OCV) of the battery cell. Specifically, it may be determined that there is a low-voltage defect when a value of change in open circuit voltage observed during aging after charging and discharging the battery cell a predetermined number of times is equal to or greater than a predetermined value. Also, it may be performed by a method of applying a predetermined voltage or current while pressurizing the battery cell and measuring a leakage current value that is measured in the battery cell. In addition, since a specific method of determining whether a battery cell has a low-voltage defect is well known to those skilled in the art, a detailed description thereof will be omitted.

The method of detecting and analyzing foreign matter in a battery cell of the present invention includes a step of disassembling the battery cell to be inspected. The disassembly of the battery cell in the present invention may be performed by a method in which the battery case is opened using a tool or the like and the electrode assembly inside the battery case is taken out to the outside of the battery case. In addition, the electrode assembly may be disassembled into individual units such as electrodes and a separator. A jelly-roll type electrode assembly must be disassembled into individual units by unwinding the wound electrode assembly.

The method of detecting and analyzing foreign matter in a battery cell of the present invention includes a step of disassembling the electrode assembly to obtain an individual unit separator. In this case, for the safety of an operator, the disassembly of the battery cell may be performed in a closed space, separated from the operator. The present invention has an advantage of being able to more accurately analyze a cause of low voltage by analyzing the separator among components in the battery cell. The reason for this is that when low voltage occurs due to metallic foreign matter, a metallic component penetrates through the separator disposed between a positive electrode and a negative electrode and is connected to cause a short circuit.

Once the individual separator is separated from the battery cell, a drying process may be additionally performed to remove the electrolyte solution remaining on a surface of the separator.

The method of detecting and analyzing foreign matter in a battery cell of the present invention includes a step of analyzing the presence or absence of metallic foreign matter on a surface of the separator by introducing the separated individual separator into an X-ray fluorescence analysis apparatus and irradiating the separator with X-rays. In this case, the metallic foreign matter exists by penetrating through the surface of the separator facing a positive electrode and the surface of the separator facing a negative electrode in the electrode assembly before disassembly. In a case in which such metallic foreign matter is present, it may be determined that the low-voltage defect is caused by the metallic foreign matter. In a case in which such metallic foreign matter is not present, other causes of the low-voltage defect, such as an electrolyte solution impregnation defect, may be analyzed.

In the X-ray fluorescence analysis apparatus, X-rays may be irradiated under the following conditions.
<X-ray source>
   - Voltage: 50 kV
   - Current: 1,000 µA
<Count rate>
   - Up to 150,000 cps

Specifically, the separated individual separator is introduced into the X-ray fluorescence analysis apparatus and an X-ray transmission image is obtained for the entire separator. In this case, points A and A' having identical X and Y coordinates on an upper surface and a lower surface of the separator as shown in FIG. 1 are specified by scanning both surfaces of the separated individual separator. The upper surface and the lower surface of the separator correspond to the surface of the separator facing the positive electrode and the surface of the separator facing the negative electrode in the electrode assembly before disassembly, respectively. Points A, A', B, C, D, and E shown in FIG. 1 are points all formed by metallic foreign matter, and their shapes may appear as dots, spots, stains, etc. Unlike points A and A', since points B, C, D, and E are not formed by the metallic foreign matter penetrating through the separator, there are no points having identical X and Y coordinates on the opposite surface of the separator.

The metallic foreign matter, in which points having identical X and Y coordinates are formed on the upper and lower surfaces of the separator as in points A and A' of FIG. 1, exists by penetrating through the surface of the separator facing the positive electrode and the surface of the separator facing the negative electrode in the electrode assembly before disassembly. Various metallic foreign matters may be present on the surface of the separator due to a battery cell manufacturing process and components included in the battery cell itself, wherein among these, since the metallic foreign matter, which exists by penetrating through the separator, directly causes a short circuit between the positive electrode and the negative electrode, the cause of the low-voltage defect may be accurately identified.

The point formed on the surface of the separator by penetration of the metallic foreign matter may have a diameter of 100 µm or less, 90 µm or less, 80 µm or less, 70 µm or less, 60 µm or less, or 20 µm to 50 µm. The method of detecting and analyzing foreign matter in a battery cell of the present invention may accurately identify the cause of the low-voltage defect because it may observe even very small metallic foreign matter that is difficult to observe visually.

The method of detecting and analyzing foreign matter in a battery cell of the present invention may include a step of analyzing components of the metallic foreign matter.

The step of analyzing the components of the metallic foreign matter is performed by measuring an X-ray fluorescence spectrum that appears when the metallic foreign matter, which exists by penetrating through the surface of the separator facing the positive electrode and the surface of the separator facing the negative electrode in the electrode assembly before disassembly, is irradiated with X-rays. In this case, it may be characterized by detecting a type of the foreign matter from a position of a peak appearing in the X-ray fluorescence analysis spectrum. In a case in which the components of the introduced metallic foreign matter are analyzed as described above, there is an advantage of allowing for quick and accurate action to be taken to determine which part of manufacturing process equipment is problematic.

The step of analyzing the components of the metallic foreign matter may be performed by moving a stage within the X-ray fluorescence analysis apparatus that analyzes the presence or absence of the metallic foreign matter on the surface of the separator, rather than by moving the separator again to another analysis apparatus. For this reason, the method of detecting and analyzing foreign matter in a battery cell of the present invention has an advantage of saving analysis time and manpower.

The detecting of the type of the foreign matter may be performed by comparing the spectrum of the separator with a spectrum of a reference separator. Herein, the reference separator refers to a normal electrode or normal separator in which no foreign matter is detected. The measured spectrum may be compared with the reference spectrum, and in a case in which an unknown peak is found, it may be determined that foreign matter has been detected, and the type of the foreign matter may be identified from a wavelength at which the unknown peak is observed.

The components of the metallic foreign matter analyzed through the X-ray fluorescence analysis apparatus may be at least one selected from the group consisting of iron (Fe), chromium (Cr), copper (Cu), zinc (Zn), nickel (Ni), manganese (Mn), cobalt (Co), and alloys thereof.

In a case in which the components of the analyzed metallic foreign matter are Fe or an alloy of Fe and Cr, it may be determined that there is a defect in bearing steel or equipment coated with Fe or Cr among cell manufacturing equipment.

In a case in which the components of the analyzed metallic foreign matter are Cu or an alloy of Cu and Zn, it may be determined that there is a defect in equipment formed of a material containing brass. For example, it may be determined that there is a defect in a cylinder, an air chuck, a floating joint, a spring, or a rotary joint of cell assembly equipment, or in a cylinder, a rod end bearing, an air chuck, a floating joint, or a spring of electrode assembly winder equipment.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Example

Three cells determined to have low-voltage defects were disassembled and separators were obtained from electrode assemblies. The number of points of metallic foreign matter visually identified on the obtained separators was counted and listed in Table 1 below.

Also, for the obtained separators, a surface of the separator facing a positive and a surface of the separator facing a negative electrode in the electrode assembly before disassembly were each scanned with X-rays, and the number of points of metallic foreign matter existing by penetrating through the surface was counted and listed in Table 1 below.

The points of the specific metallic foreign matter were irradiated with X-rays again to measure X-ray fluorescence spectra emitted therefrom. In this case, the number of points where components of the metallic foreign matter were Fe or an alloy of Fe and Cr and the number of points where components of the metallic foreign matter were Cu or an alloy of Cu and Zn were counted and listed in Table 1 below.

**[Table 1]**

| | The number of points visually observed | The number of points analyzed by X-rays | The number of points where components of the metallic foreign matter were Fe or an alloy of Fe and Cr | The number of points where components of the metallic foreign matter were Cu or an alloy of Cu and Zn |
|---|---|---|---|---|
| Separator 1 | 0 | 1 | 1 | 0 |
| Separator 2 | 7 | 14 | 11 | 3 |
| Separator 3 | 0 | 4 | 4 | 0 |

As may be confirmed in Table 1, the number of points analyzed by X-ray was greater than the number of points of metallic foreign matter visually observed. In a case in which the metallic foreign matter was analyzed by the method of detecting and analyzing foreign matter in a battery cell of the present invention, accurate and fast inspection was possible in comparison to visual inspection.

## Claims

1. A method of detecting and analyzing foreign matter in a battery cell, the method comprising:
preparing a battery cell to be inspected;
obtaining a separator from an electrode assembly by disassembling the battery cell to be inspected; and
analyzing the presence or absence of metallic foreign matter on a surface of the separator by introducing the separator into an X-ray fluorescence analysis apparatus and irradiating the separator with X-rays,
wherein the metallic foreign matter exists by penetrating through the surface of the separator facing a positive electrode and the surface of the separator facing a negative electrode in the electrode assembly before disassembly.

2. The method of claim 1, wherein the battery cell to be inspected is a battery cell in which a low-voltage defect has occurred.

3. The method of claim 1, wherein a diameter of a point formed on the surface of the separator by penetration of the metallic foreign matter is 100 µm or less.

4. The method of claim 1, further comprising analyzing components of the metallic foreign matter.

5. The method of claim 4, wherein the analyzing of the components of the metallic foreign matter comprises measuring an X-ray fluorescence spectrum of the metallic foreign matter that exists by penetrating through the surface of the separator facing the positive electrode and the surface of the separator facing the negative electrode in the electrode assembly before disassembly.

6. The method of claim 5, wherein the analyzing of the components of the metallic foreign matter is **characterized by** detecting a type of the foreign matter from a position of a peak appearing in the X-ray fluorescence analysis spectrum.

7. The method of claim 6, wherein the detecting of the type of the foreign matter is performed by comparing the spectrum of the separator with a spectrum of a reference separator.

8. The method of claim 5, wherein the components of the analyzed metallic foreign matter are at least one selected from the group consisting of iron (Fe), chromium (Cr), copper (Cu), zinc (Zn), nickel (Ni), manganese (Mn), Fe, cobalt (Co), and alloys thereof.

9. The method of claim 8, further comprising determining that there is a defect in bearing steel or equipment coated with Fe or Cr among cell manufacturing equipment, when the components of the analyzed metallic foreign matter are Fe or an alloy of Fe and Cr.

10. The method of claim 8, further comprising determining that there is a defect in at least one of a cylinder, an air chuck, a floating joint, a spring, or a rotary joint of cell assembly equipment; or a cylinder, a rod end bearing, an air chuck, a floating joint, or a spring of electrode assembly winder equipment, when the components of the analyzed metallic foreign matter are Cu or an alloy of Cu and Zn.
